# EUROPEAN PATENT APPLICATION

(11) **EP 0 972 797 A1**
(43) Date of publication of application: **19.01.2000**
(21) Application number: 98910978.0
(22) Date of filing: 25.03.1998
(51) Int. Cl.: C08L 15/00, C08K 5/09, C08K 5/14, C08F 236/12

(54) **RUBBER COMPOSITION CONTAINING METAL SALT OF ETHYLENICALLY UNSATURATED CARBOXYLIC ACID**

(30) Priority: 31.03.1997 JP 9804997
(71) Applicant: NIPPON ZEON CO., LTD., Chiyoda-ku Tokyo 100-8323 (JP)
(72) Inventor: FUJII, Yoshinori, Res. & Dev. Center, Nippon Zeon, Kawasaki-shi, Kanagawa 210-0863 (JP)
(74) Representative: Albrecht, Thomas, Dr.
(86) International application number: JP9801303
(87) International publication number: WO9844036

(57) **Abstract**

This invention provides a crosslinkable rubber composition comprising a nitrile-containing highly saturated copolymer rubber, a metal salt of an α,β-ethylenically unsaturated carboxylic acid, and an organic peroxide, wherein the nitrile-containing highly saturated copolymer rubber is characterized by having been treated by applying a high shearing force thereto in the presence of an antioxidant so as to reduce its Mooney viscosity by 15 points or greater, by having a Mooney viscosity of 5 to 135 and a molecular weight distribution (Mw/Mn) of 3.0 to 5.0, and by showing a Mooney viscosity increase of 10 points or less when it is allowed to stand at room temperature for 30 days after the reduction of its Mooney viscosity. Rubber materials (e.g., belts, rolls and hoses) obtained by crosslinking this composition have improved strength properties.

## Description

### Technical Field

This invention relates to crosslinkable rubber compositions which have good processability and can yield high-strength rubber materials. More particularly, this invention relates to cross-linkable rubber compositions obtained by compounding a nitrile-containing highly saturated copolymer rubber having a Mooney viscosity reduced by the application of a high shearing force, with a metal salt of an α,β-ethylenically unsaturated carboxylic acid and an organic peroxide.

### Background Art

It is known that crosslinkable elastomer compositions obtained by compounding an ethylenically unsaturated nitrile-conjugated diene copolymer rubber, other diene rubber, an ethylene-propylene copolymer rubber or the like with methacrylic acid or other α,β-ethylenically unsaturated carboxylic acid, a compound of divalent metal such as zinc, and an organic peroxide can yield cross-linked elastomer products having high mechanical strength (Japanese Patent Laid-Open Nos. 57553/*'*79, 215085/*'*85 and 306443/*'*89).

It is believed that, in these crosslinkable elastomer compositions, not only the elastomer component, but also the methacrylic acid or other α,β-ethylenically unsaturated carboxylic acid, the zinc or other divalent metal compound, and the organic peroxide react during crosslinking to form a crosslinked polymer.

Among others, crosslinkable rubber compositions obtained by compounding a nitrile-containing highly saturated copolymer rubber with a zinc salt of methacrylic acid and an organic peroxide type crosslinking agent can yield rubber products having excellent thermal resistance and oil resistance, as well as excellent strength properties (for example, Japanese Patent Laid-Open No. 270753/*'*88).

However, nitrile-containing highly saturated copolymer rubbers generally fail to have good processability. Consequently, it often happens that the dispersibility of various compounding ingredients such as reinforcing agents in the rubbers is not always satisfactory. In order to further increase the strength of rubber products obtained from these crosslinkable rubber compositions, it is desired to improve their processability.

In order to impart good processability to a nitrile-containing highly saturated copolymer rubber, there has been proposed a method in which its Mooney viscosity is reduced by the application of a high shearing force (Japanese Patent Laid-Open No. 122103/*'*91). This proposed method comprises shearing a hydrogenated nitrile rubber having a Mooney viscosity of 55 to 100 at a high shearing strength in the presence of an oxygen donor such as oxygen or a peroxide, and a radical transfer agent so as to subject the rubber to thermal oxidative decomposition and thereby reduce its Mooney viscosity to a value of 30 to 50.

This proposed method is based on the concept that free radicals produced during thermal oxidative decomposition are stabilized with the aid of an oxygen donor. However, it has been found that, since the peroxide, carboxyl group, carbonyl group and like species present after the high-shear treatment are causative of gelation, the rubber shows an increase in Mooney viscosity during its storage even if an ordinary antioxidant is incorporated therein after the high-shear treatment.

An object of the present invention is to further improve the strength properties of rubber products obtained by crosslinking a crosslinkable rubber composition prepared by compounding a nitrile-containing highly saturated copolymer rubber with a metal salt of an α,β-ethylenically unsaturated carboxylic acid and an organic peroxide.

As a result of repeated intensive investigations, the present inventor has found that, by crosslinking a crosslinkable rubber composition which is prepared by treating hydrogenated acrylonitrile-butadiene copolymer rubber in the presence of an antioxidant by means of a twin-screw extruder so as to reduce its Mooney viscosity, and then compounding this rubber with methacrylic acid and zinc oxide, the strength properties of the resulting rubber products can further be improved as compared with the prior art.

### Disclosure of the Invention

Thus, the present invention provides the following cross-linkable rubber compositions (1) to (4).
(1) A crosslinkable rubber composition comprising a nitrile-containing highly saturated copolymer rubber, a metal salt of an α,β-ethylenically unsaturated carboxylic acid, and an organic peroxide, wherein the nitrile-containing highly saturated copolymer rubber is characterized by having been treated by applying a high shearing force thereto in the presence of an antioxidant so as to reduce its Mooney viscosity by 15 points or greater, by having a Mooney viscosity of 5 to 135 and a molecular weight distribution (Mw/Mn) of 3.0 to 5.0, and by showing a Mooney viscosity increase of 10 points or less when it is allowed to stand in air at room temperature for 30 days after the reduction of its Mooney viscosity.
(2) The crosslinkable rubber composition of (1) which is used for the fabrication of belts.
(3) The crosslinkable rubber composition of (1) which is used for the fabrication of rolls.
(4) The crosslinkable rubber composition of (1) which is used for the fabrication of hoses.

The present invention will be more specifically described hereinbelow.

The high-shear treated nitrile-containing highly saturated copolymer rubber used in the present invention is obtained by hydrogenating carbon-to-carbon double bonds of a nitrile-containing unsaturated copolymer rubber, which comprises a copolymer of an ethylenically unsaturated nitrile (e.g., acrylonitrile, methacrylonitrile or α-chloroacrylonitrile) and a conjugated diene (e.g., 1,3-butadiene, isoprene, 1,3-pentadiene or 2,3-dimethyl-1,3-butadiene), or a multiple copolymer of the aforesaid two monomers and at least one of monomers copolymerizable therewith (e.g., vinyl aromatic compounds, acrylic acid, methacrylic acid, alkyl acrylates, alkyl methacrylates, allcoxyalkyl acrylates, alkoxyalkyl methacrylates, cyanoalkyl acrylates and cyanoalkyl methacrylates); and then subjecting the resulting rubber to high-shear treatment in the presence of an antioxidant so as to reduce its Mooney viscosity.

The nitrile-containing saturated polymer rubber, to which a high shearing force is applied, usually contains 10 to 60% by weight, preferably 20 to 50% by weight, of ethylenically unsaturated nitrile monomer units and has been hydrogenated by partial hydrogenation or other means to such an extent that not less than 70%, preferably not less than 90%, of the carbon-to-carbon double bonds are hydrogenated. If the content of ethylenically unsaturated nitrile monomer units is unduly low, the rubber will have insufficient oil resistance, while if it is unduly high, the rubber will show an undesirable reduction in elasticity. If the degree of hydrogenation of carbon-to-carbon double bonds is greater than 30% by weight, the rubber will show a reduction in strength properties. This nitrile-containing highly saturated copolymer rubber generally has good oil resistance, thermal resistance and weather resistance.

Specific examples of this nitrile-containing highly saturated copolymer rubber include hydrogenated acrylonitrile-butadiene copolymer rubber, hydrogenated acrylonitrile-isoprene copolymer rubber, hydrogenated acrylonitrile-butadiene-acrylate copolymer rubber and hydrogenated acrylonitrile-butadiene-acrylate-methacrylic acid copolymer rubber.

This nitrile-containing highly saturated copolymer rubber, to which a high shearing force is applied, usually has a Mooney viscosity (ML₄) in the range of 60 to 150. Moreover, its iodine value is not greater than 120 and preferably not greater than 60.

When this nitrile-containing highly saturated copolymer rubber is subjected to high-shear treatment, its Mooney viscosity in the range of 60 to 150 is reduced by 15 points or greater, preferably 30 points or greater, and more preferably 60 points or greater, so that the copolymer rubber has a Mooney viscosity in the range of 5 to 135, preferably 20 to 120, and more preferably 20 to 90.

This high-shear treatment usually comprises treating the rubber at a temperature of 200 to 380°C, preferably 240 to 360°C, and a shear rate of 500 to 5,000 S ⁻¹, preferably 800 to 4,800 S ⁻¹, for a period of 50 to 200 seconds, preferably 90 to 150 seconds, substantially in the absence of oxygen donors such as oxygen, peroxides and nitrates. The expression "substantially in the absence of oxygen donors" as used herein means that the present invention does not include an embodiment in which the foregoing oxygen donors are allowed to coexist as described, for example, in Japanese Patent Laid-Open No. 122103/*'*91. It is to be understood that the present invention is not necessarily limited to treatment in an atmosphere of an inert gas such as nitrogen.

The nitrile-containing highly saturated copolymer rubber having a Mooney viscosity reduced by the high-shear treatment is a substantially gel-free rubber characterized in that it shows a Mooney viscosity increase of at most 10 points or less, preferably 5 points or less, when it is allowed to stand in air at room temperature for 30 days after the reduction of its Mooney viscosity, and its molecular weight distribution, defined as the ratio (Mw/Mn) of its weight-average molecular weight (Mw) to its number-average molecular weight (Mn), is usually in the range of 3.0 to 5.0 and preferably 3.5 to 4.5. The term "average molecular weight" as used herein refers to a value determined by GPC (gel permeation chromatography) with reference to standard polystyrene.

The apparatus which can be suitably used for the application of a high shearing force include extruders having a single screw or multiple screws. Among others, a twin-screw extruders is preferably used. No particular limitation is placed on the L/D (length/diameter) ratio of the extruder, and it may suitably be chosen so as to be in the range of about 10 to 100. Generally, it is preferable to use an extruder having a plurality of barrels connected in series and constructed so that the first zone following a hopper for the supply of raw material serves to melt the rubber fed as the raw material and disperse an antioxidant uniformly thereinto, the succeeding zone serves to apply a high shearing force to the rubber at a predetermined high temperature by utilizing the shearing force of the screw(s), the succeeding zone equipped with a degassing vent serves to remove volatile by-products under reduced pressure, and the last extrusion zone equipped with an extruding head serves to extrude therefrom the rubber now having a reduced Mooney viscosity. Although the last degassing zone is maintained at a reduced pressure of 10 to 750 mmHg and preferably 700 to 750 mmHg, it may be maintained at atmospheric pressure. If desired, a peptizer such as the zinc salt of 2-benzamidothiophenol may be added during the high-shear treatment.

Among twin-screw extruders preferably used as apparatus for the application of a high shearing force, a twin-screw extruder having two completely engaged screws rotating in the same direction is especially preferred. As to the shape of the screws, double-threaded or higher multi-threaded screws are preferred for the purpose of applying a shearing force. Usually, double-threaded or triple-threaded screws are used. Specific embodiments are as follows.

The L/D (length/diameter) ratio of the extruder is preferably in the range of 30 to 50. If this ratio is unduly small, a sufficiently extending cooling zone cannot be secured. Consequently, the rubber will not be fully cooled at the outlet of the extruder and, therefore, cannot be satisfactorily taken off, or the rubber will be extruded at such a high temperature that the rubber may undergo deterioration or gelation. That is, since the rubber has high viscosity, a very large amount of heat is generated under high shear and the rubber easily reaches a high temperature. For this reason, the rubber must be fully cooled before being extruded from the extruder and, therefore, the extruder must be provided with a cooling zone of required extent. The rubber temperature at the outlet of the extruder is 360°C or below and preferably 330°C or below.

Generally, in an extruder having a plurality of barrels connected in series, the first zone following a hopper for the supply of raw material and comprising one of the three almost equal parts into which the whole length of the extruder is divided serves to melt the raw material and form an essentially homogeneous blend in which an antioxidant is uniformly dispersed. Basically, the function of the screw(s) in this zone is to send the rubber forward, so that the rubber is gradually compressed. The temperature is preferably preset so that the melt kneading in the succeeding zone will be carried out properly. In practice, it is preferable that the temperature be raised to 250°C by steps.

In the middle zone comprising one of the three almost equal parts into which the whole length of the extruder is divided, the rubber is kneaded by the action of the screw(s), and a shearing force is applied to the rubber at a predetermined high temperature by utilizing the screw(s). The temperature in this zone is preset at a value of 240 to 320°C and preferably 260 to 300°C. If the temperature is unduly high, the degree of reduction in Mooney viscosity will be increased, but the rubber temperature will rise to such an extent that the rubber will be extruded before it is fully cooled. As a result, the rubber may undergo deterioration or gelation as described above. On the other hand, if the temperature is unduly low, the degree of reduction in Mooney viscosity will be low. Although it may be possible to employ a method for raising the rubber temperature by utilizing the generation of heat by shearing, this method lacks stable productivity in the extruder. Accordingly, it is preferable to preset the temperature as described above.

In the succeeding last zone, the rubber heated to a high temperature is cooled, moisture and volatile by-products are removed through a degassing vent, and the rubber now having a reduced Mooney viscosity is extruded from an extruding head. Basically, the function of the screw(s) in this zone is to extrude the rubber, and it is preferable that the shearing force be weak. The rubber must be fully cooled while it passes through this zone. The time required for its passage can be controlled by varying the pitch of the screw(s). The temperature in this zone is preset at a value of 180 to 250°C and preferably 190 to 240°C. Although the degassing zone is maintained at a reduced pressure of 10 to 750 mmHg and preferably 700 to 750 mmHg, it may be maintained at atmospheric pressure.

The antioxidant used during the application of a high shearing force is an organic compound which, as known in the field of rubber technology, functions to convert rubber radicals and rubber hydroperoxy radicals formed by the oxidation reaction and other reactions of rubber into a form not participating in the oxidation chain reaction mechanism or to convert hydroperoxides into a stable alcohol form, and which is used for the purpose of preventing the aging of rubber and extending its life.

Examples of the antioxidant used include aromatic secondary amine type, amine-ketone type, mercaptobenzimidazole type, bisphenol type, monophenol type, thiobisphenol type, hydroquinone type, nickel salt type, thiourea type, thioether type and phosphorus type antioxidants. Among them, aromatic secondary amine type, amine-ketone type, mercaptobenzimidazole type and bisphenol type antioxidants are preferred.

Aromatic secondary amine type antioxidants are secondary amines having an aromatic ring attached to the nitrogen atom. Specific examples thereof include diarylamine type antioxidants such as octylated diphenylamine, alkylated diphenylamine, 4,4'-bis(di-methylbenzyl)diphenylamine and phenyl-α-naphthylamine; diaryl-p-phenylenediamine type antioxidants such as diphenyl-p-phenylenediamine and dinaphthyl-p-phenylenediamine; and alkyl/aryl-p-phenylenediamine type antioxidants such as N-isopropyl-N 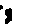 -phenyl-p-phenylenediamine, N-1,3-dimethylbutyl-N 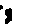 -phenyl-p-phenylene-diamine, N-(3-methacryloyloxy-2-hydroxypropyl)-N 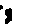 -phenyl-p-phenylenediamine and N-(methacryloyl)-N 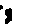 -phenyl-p-phenylenediamine.

Amine-ketone type antioxidants are condensation products of aromatic amines with ketones. Specific examples thereof include the aniline-acetone condensation product, the p-phenetidine-acetone condensation product and the diphenylamine-acetone condensation product.

Specific examples of mercaptobenzimidazole type antioxidants include mercaptobenzimidazole and its zinc salt, and mercaptomethylbenzimidazole and its zinc salt.

Specific examples of bisphenol type antioxidants include bisphenol alkanes such as 2,2'-methylenebis(4-methyl-6-t-butylphenol) and 4,4'-butylidenebis(3-methyl-6-t-butylphenol); and bis-phenol sulfides such as 4,4'-thiobis(3-methyl-6-t-butylphenol).

Specific examples of monophenol type antioxidants include styrenated phenol, 2,6-di-t-butyl-4-methylphenol, 2,6-di-t-butyl-4-ethylphenol, n-octadeyl 3-(3,5-di-t-butyl-4-hydroxyphenyl)-propionate, 2,4-dimethyl-6-(1-methylcyclohexyl)phenol, 2-t-butyl-6-(3-t-butyl-2-hydroxy-5-methylbenzyl)-4-methylphenyl acrylate and 2-[1-(2-hydro-3,5-di-t-pentylphenyl)ethyl]-4,6-di-t-pentylphenyl acrylate.

Specific examples of thiobisphenol type antioxidants include 4,4'-thiobis(3-methyl-6-t-butylphenol), 4,4'-bis(3,5-di-t-butyl-4-hydroxybenzyl) sulfide and 4,4'-thiobis(6-t-butyl-o-cresol).

Specific examples of hydroquinone type antioxidants include 2,5-di-t-butylhydroquinone and 2,5-di-t-amylhydroquinone.

Specific examples of nickel salt type antioxidants include nickel dimethyldithiocarbamate, nickel diethyldithiocarbamate, nickel dibutyldithiocarbamate and nickel isopropylxanthate.

Specific examples of thiourea type antioxidants include 1,3-bis(dimethylaminopropyl)thiourea and tributylthiourea.

Specific examples of thioether type antioxidants include dilauryl 3,3-thiodipropionate, distearyl 3,3-thiodipropionate and pentaerythritol tetrakis((3-laurylthiopropionate).

Specific examples of phosphorus type antioxidants include tris(nonylated phenyl) phosphite.

These antioxidants are usually used in an amount of 1 to 10 parts by weight, preferably 2 to 5 parts by weight, per 100 parts by weight of the nitrile-containing highly saturated copolymer rubber.

These antioxidants may be used alone or in admixture of two or more. Moreover, the antioxidant or antioxidants may be added at a time to the nitrile-containing highly saturated copolymer rubber to which a high shearing force is applied, or may be added thereto in divided portions. When two or more antioxidants are used, it is possible, for example, to first add an amine-ketone type antioxidant to the rubber, extrude the rubber from an extruder, and then add a mercaptobenzimidazole type antioxidant thereto.

In preparing the crosslinkable rubber composition of the present invention, other rubbers may be used in combination with the nitrile-containing highly saturated copolymer rubber having been treated by applying a high shearing force thereto so as to reduce its Mooney viscosity, so long as the effects of the present invention are not detracted from.

Examples of such other rubbers include heat-resisting rubbers.

Heat-resisting rubbers usually have a Mooney viscosity in the range of 10 to 200, preferably 20 to 150, and more preferably 30 to 100.

Specific examples thereof include nitrile-containing unsaturated copolymer rubbers and their hydrogenated rubbers, saturated ethylene copolymer rubbers, polyacrylic ester copolymer rubbers, polyether rubbers and fluororubbers. These heat-resisting rubbers may be used in admixture of two or more.

Usable nitrile-containing unsaturated copolymer rubbers and their hydrogenated rubbers are the same as those described previously.

Saturated ethylene copolymer rubbers are copolymers derived from ethylene, an α-olefin and an unconjugated diene, and are substantially saturated copolymer rubbers. Typical examples thereof include low-crystalline or noncrystalline elastomers consisting mainly of ethylene and an α-olefin or olefins of 3 to 14 carbon atoms and having a degree of crystallinity of not greater than 20% and preferably not greater than 10%, such as ethylene-propylene-unconjugated diene terpolymer or multiple copolymer rubber, ethylene-propylene-1-butene-unconjugated diene copolymer rubber and ethylene-1-butene-unconjugated diene multiple copolymer rubber; and mixtures thereof. Among others, ethylene-propylene-unconjugated diene terpolymer rubber is preferred. Usable unconjugated dienes include dicyclopentadiene, 1,4-hexadiene, cyclooctadiene, methylenenorbornene, 5-ethylidene-2-norbornene and the like. Among others, copolymers containing dicyclopentadiene or 5-ethylidene-2-norbornene as a third component are preferred.

These ethylene-α-olefin copolymer rubbers preferably have an iodine value of not greater than 20.

In these ethylene-based saturated copolymer rubbers, the molar ratio of ethylene units to α-olefin units is preferably in the range of 50/50 to 90/10 and more preferably 60/40 to 84/16, and the molar ratio of (ethylene + α-olefin) units to unconjugated diene units (in the case of a terpolymer or multiple copolymer) is preferably in the range of 98/2 to 90/10 and more preferably 97/3 to 94/6.

The ethylenically unsaturated carboxylic acid metal salt used in the present invention may have a structure in which an ethylenically unsaturated carboxylic acid of 5 or less carbon atoms having one or more carboxyl groups is combined with a metal by an ionic bond.

Examples of the ethylenically unsaturated carboxylic acid include monocarboxylic acids such as acrylic acid and methacrylic acid; dicarboxylic acids such as maleic acid, fumaric acid and itaconic acid; and monoester compounds formed from an unsaturated carboxylic acid and having 1 to 8 carbon atoms, such as monomethyl maleate and monoethyl itaconate.

No particular limitation is placed on the type of the metal, so long as it can reacts with the aforesaid ethylenically unsaturated carboxylic acid to form a salt. Usually, there may be used zinc, magnesium, calcium, barium, titanium, chromium, iron, cobalt, nickel, aluminum, tin, lead and the like. Among these metals, zinc, magnesium, calcium and aluminum are suitable from the viewpoint of strength properties, and zinc is especially preferred.

The molar ratio of the aforesaid ethylenically unsaturated carboxylic acid to the aforesaid metal is preferably in the range of 1/0.5 to 1/3.

When the crosslinkable rubber composition of the present invention is prepared, instead of compounding and kneading the ethylenically unsaturated carboxylic add metal salt with other ingredients, the ethylenically unsaturated carboxylic acid metal salt may be formed in situ by adding the aforesaid ethylenically unsaturated carboxylic acid and an oxide, hydroxide or carbonate of the aforesaid metal, and reacting them during kneading or other operation.

Although no particular limitation is placed on the amount of ethylenically unsaturated carboxylic acid metal salt used, it is usually used in an amount of 3 to 120 parts by weight, preferably 5 to 100 parts by weight, and more preferably 10 to 60 parts by weight, per 100 parts by weight of the rubber component in the composition of the present invention. If its amount used is unduly small or unduly large, the rubber products obtained by crosslinking will undesirably have poor strength properties.

No particular limitation is placed on the type of the organic peroxide used in the present invention. However, preferred examples thereof include dicumyl peroxide, di-t-butyl peroxide, benzoyl peroxide, 2,5-dimethyl-2,5-di(t-butylperoxy)hexyne-3, 2,5-dimethyl-2,5-di(benzoylperoxy)hexane, etc. These organic peroxides may be used alone or in admixture of two or more, and are usually used in an amount of 0.2 to 20 parts by weight, preferably 1 to 10 parts by weight, per 100 parts by weight of the rubber component.

In order to improve mold release properties during cross-link molding, a sulfur- or phosphorus-containing anionic surface-active agent may be incorporated into the crosslinkable rubber composition of the present invention. Examples of the sulfur- or phosphorus-containing anionic surface-active agent include (1) sulfonic acid salt type surface-active agents comprising group IA, IIA and IIB metal salts of sulfonic acids, (2) sulfuric ester salt type surface-active agents comprising group IA, IIA and IIB metal salts of esters formed from sulfuric acid and alcohols, and (3) phosphoric ester salt type surface-active agents comprising group IA, IIA and IIB metal salts of phosphoric esters.

The group IA, IIA and IIB metals include lithium, sodium, potassium, magnesium, calcium, barium, zinc and the like. Among others, sodium is preferably used.

Besides these compounds, there may be used phosphonic acid compounds (e.g., alkylphosphonic acids, alkylarylphosphonic acids, phosphonic acid amine salts, acyloxyphoshonic acid, ketophosphonic acids and phosphonic/sulfuric esters), alkylsulfinic acids, alkylthiosulfuric esters, alkylhydrosulfurous esters, alkylpersulfuric esters, alkylsulfamic acids, amide-linked sulfamic acids, alkylsulfonamides, alkylacylsulfonamides, alkyldisulfonimides, alkylsulfonylureas, alkyldithiocarbamic acids and the like.

These anionic surface-active agents may be used alone or in admixture of two or more. Among these surface-active agents, sulfonic acid salt type surface-active agents (1) are preferably used. Among others, alkylbenzenesulfonic acid salts having an alkyl group of 10 to 18 carbon atoms are preferred, and sodium dodecylbenzenesulfonate is especially preferred.

Although no particular limitation is placed on the amount of anionic surface-active agent used, it is usually used in an amount of 0.5 to 10 parts by weight, preferably 1 to 5 parts by weight, per 100 parts by weight of the rubber component. If its amount used is unduly small, the resulting composition will show no improvement in mold release properties. If its amount used is unduly large, the rubber products obtained by crosslinking will undesirably show a reduction in strength properties.

Moreover, a metal salt of a higher fatty acid may also be incorporated thereinto as required. Examples of the higher fatty acid include saturated fatty acids such as caproic acid, caprylic acid, capric acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, montanic acid and melissic acid; and unsaturated fatty acids such as oleic acid, elaidic acid, linolic acid, linolenic acid and arachidonic acid.

No particular limitation is placed on the type of the metal used for the synthesis of such a higher fatty acid metal salt. However, preferred examples thereof include alkali metals such as lithium, potassium and sodium; alkaline earth metals such as magnesium, calcium and barium; zinc family metals such as zinc and cadmium; carbon family metals such as tin and lead; and group VIII metals such as nickel. Among others, from the viewpoint of the properties of rubber products obtained by crosslinking, alkali metals, alkaline earth metals, zinc family metals and carbon family metals are preferred, and lithium, sodium, potassium, calcium, barium, zinc and tin are especially preferred. The amount of higher fatty acid metal salt used is in the range of 0.5 to 20 parts by weight, preferably 1 to 10 parts by weight, per 100 parts by weight of the rubber component.

The crosslinkable rubber composition of the present invention is prepared by kneading the above-described nitrile-containing highly saturated copolymer rubber having been treated by the application of a high shearing force, with the above-described compounding ingredients by means of a roll mill, Banbury mixer or the like. Beside these compounding ingredients, various additives usually used in the elastomer industry may be incorporated therein. They include reinforcing agents such as carbon black and white carbon; fillers such as calcium carbonate, clay and talc; and various compounding agents such as plasticizers, antioxidants, ultraviolet absorbers, softeners, foaming agents and colorants.

Crosslinking of the crosslinkable rubber composition of the present invention may be carried out in one stage or in two stages. When it is carried out in two stages, the crosslinking temperature at the first stage is preferably in the range of about 140 to 180°C. Although the crosslinking time depends on the crosslinking temperature, it generally ranges from 2 to 20 minutes. The cross-linking temperature at the second stage is preferably about 10°C higher than that at the first stage.

The crosslinkable rubber composition of the present invention may be crosslink-molded into various rubber products according to well-known molding techniques such as press molding, injection molding and transfer molding. In carrying out this cross-link molding, the crosslinked rubber can be efficiently molded by using molds coated with an organic fluorine compound type mold releasing agent.

The organic fluorine compound type mold releasing agent used is a compound which forms a liquid or solid at the molding temperature of the crosslinked rubber. Examples thereof include organic fluorine compounds of the perfluorosulfonic acid salt type, fluorinated organic compound type, fluorinated olefin addition polymer type, and fluorinated ether type.

Among them, perfluorosulfonic acid salt type mold releasing agents are superior in performance. These organic fluorine compound type mold releasing agents may be used alone or in admixture of two or more. Moreover, mold releasing agents other than organic fluorine compound type mold releasing agents, such as silicone type mold releasing agents and metal soap type mold releasing agents, may also be used in combination. In order that the performance of the organic fluorine compound type mold releasing agent(s) may not be detracted from, they are suitably used in an amount of not greater than 50% by weight, preferably not greater than30% by weight, based on the organic fluorine compound type mold releasing agent(s).

The organic fluorine compound type mold releasing agent used is usually dissolved or dispersed in an organic solvent or an organic medium. It is usually preferable that the concentration of the organic fluorine compound type mold releasing agent in the organic solvent solution or aqueous dispersion be in the range of about 0.05 to 10% by weight.

In order to apply the organic fluorine compound type mold releasing agent, there may be employed any well-known method. For example, the mold releasing agent may be applied by dipping the mold into a solution or dispersion of the mold releasing agent, by spraying or brushing the mold with a solution or dispersion of the mold releasing agent, or by impregnating cloth with a solution or dispersion of the mold releasing agent, using this cloth to coat the mold therewith, and then evaporating the organic solvent or water.

### Industrial Appicability

### [Composite materials formed from the rubber composition and fibers]

The rubber composition of the present invention exhibits good processability and hence brings about an improved adhesion to various fibers such as nylons, composite materials formed from the rubber and fibers can yield products having excellent bonding strength and mechanical strength as a result of crosslink bonding. These composite materials are useful for the fabrication of belts, hoses and the like. Usable fibers include natural fibers such as cotton; regenerated fibers such as rayon; synthetic fibers such as nylons, polyesters, vinylon and aromatic polyamide fibers; steel fiber; glass fiber; and carbon fiber. These fibers may be used alone or in admixture of two or more. Although these fibers are used by embedding them in the nitrile-containing highly saturated copolymer rubber as reinforcing fillers in the form of staple, in the form of filaments, or in the form of cords, ropes or woven fabrics (e.g., canvas and reed screens), the type and form of the fiber used may suitably be determined according to the type (or use) of the desired rubber product.

Prior to compounding with the copolymer rubber, the fibers are subjected to adhesion pretreatment according to the method usually employed for the respective fibers, but no special treatment is required. For example, rayon and nylons are usually subjected to adhesion treatment with a mixture (hereinafter abbreviated as RFL) composed of an aqueous solution of a resorcinol-formalin precondensate (hereinafter abbreviated as RF) and a rubber latex.

On the other hand, in the case of fibers such as polyesters and aromatic polyamides, the above-described adhesion treatment with RFL may fail to produce a sufficient adhesive force because they have poor adhesion to rubber owing to their molecular structures. Accordingly, these fibers are previously treated with a treating solution containing a compound selected from isocyanates, ethylenethioureas, epoxies and the like, or an appropriate combination of such compounds, then heat-treated, and subsequently subjected to adhesion treatment with RFL. For glass fiber, it is generally effective to treat it with a silane coupling agent such as epoxysilane or an aminosilane (e.g., aminopropyltriethoxysilane) prior to adhesion treatment with RFL.

No particular limitation is placed on the type of the rubber latex used in the adhesion treatment with RFL. Examples thereof include nitrile copolymer latices and halogen-containing polymer latices. The nitrile copolymer latices include, for example, acrylonitrile-butadiene copolymer latex, acrylonitrile-butadiene-methacrylic acid copolymer latex, acrylonitrile-butadiene-acrylic acid copolymer latex, acrylonitrile-butadiene-vinylpyridine copolymer latex, and latices of these copolymers whose butadiene units have been hydrogenated. The halogen-containing polymer latices include epichlorohydrin polymer latex, latex of a copolymer of epichlorohydrin and one or more other epoxide and oxetanes, chloroprene rubber latex, chlorosulfonated polyethylene latex, chlorinated polyethylene latex, latex of chlorine-containing acrylic rubber copolymerized with a chlorine-containing monomer as a crosslinking monomer, brominated butyl rubber latex, polyvinylidene chloride latex, latex of a chlorinated or brominated diene rubber (e.g., acrylonitrile-butadiene copolymer rubber, styrene-butadiene copolymer rubber or polybutadiene rubber), chlorinated or brominated ethylene-propylene-diene monomer terpolymer latex, and the like.

An aqueous emulsion of the nitrile-containing highly saturated copolymer rubber may preferably be used as the latex for adhesion treatment with RFL, because this can further enhance the adhesion between the rubber composition and the fiber. These rubber latices may be used alone or in admixture.

Rubber latices prepared by emulsion polymerization may be directly used in the adhesion treatment with RFL. Besides these rubber latices, there may also be used rubber latices obtained by dissolving a solid polymer in a solvent, adding water and an emulsifier to this solution, stirring the resulting mixture to form an emulsion, and removing the solvent therefrom by means of an evaporator or the like. In the present invention, no particular limitation is placed on the method for preparing the latex.

The RFL solution used for the treatment of fibers is a mixture of a rubber latex and RF. Although no particular limitation is placed on the composition of the mixture, it is usually desirable that the solid weight ratio of the latex to RF be in the range of 10:1 to 2:1. Moreover, although no particular limitation is placed on the molar ratio of resorcinol to formalin in the RF solution, it is usually desirable that the molar ratio be in the range of 1:3 to 3:1. More desirably, it is in the range of 1:1 to 1.5:1. Furthermore, as the RF solution, any mixture commonly used for crosslink bonding between a rubber composition and a fiber may be used without any particular limitation.

Although no particular limitation is placed on the method for treating a fiber with the RFL treating solution, it is common practice to dip the aforesaid fiber according to a dipping process and the heat-treat it. No particular limitation is placed on the heat-treating conditions employed in the present invention. However, a temperature and time sufficient to react and fix the RFL deposited by dipping are chosen, though they may vary somewhat according to the type of the fiber. Usually, the heat treatment is carried out at a temperature of about 140 to 210°C for about 1 to 10 minutes. Depending on the type of the fiber, it is usually possible to pretreat the fiber by dipping it into an isocyanate solution, an epoxy solution or a mixture thereof and then drying it, prior to dipping into the aforesaid heat-treating solution. In this case, it is desirable that the drying temperature be not higher than the succeeding heat-treating temperature.

### [Compounding of the rubber with a fiber]

In carrying out crosslink bonding between a fiber having undergone the above-described RFL treatment and the nitrile-containing highly saturated copolymer rubber composition, the fiber is, for example, blended with the nitrile-containing highly saturated copolymer rubber composition or laminated with the rubber composition. The crosslink bonding is carried out under crosslinking conditions commonly employed for the rubber composition. Although no particular limitation is placed on the crosslinking conditions, the crosslinking is usually carried out at a temperature of 130 to 200°C and a pressure of 0.5 to 10 MPa for 1 to 120 minutes.

### [Belts]

No particular limitation is placed on the method for the fabrication of belts. The rubber composition of the present invention is compounded with a fiber having undergone adhesion pretreatment according to a common belt fabrication process. Then, belts are made by molding the resulting composite material into a shape suitable for the intended purpose, and then subjecting it to a cross-linking step.

### [Hoses]

No particular limitation is placed on the structure of a hose using the rubber composition of the present invention and the method for the fabrication of such a hose. The rubber composition of the present invention is particularly suitable for use as a material for the innermost layer of a hose of multilayer structure, usually of two-layer or three-layer structure, but may be used as a material for other layers. Each layer of the hose is formed by crosslinking a crosslinkable rubber composition meeting its intended purpose. The crosslinkable rubber composition constituting each layer thereof also comprises a rubber compounded with one or more crosslinking agents, assistants, fillers, antioxidants, plasticizers, processing aids and other additives as required. Moreover, in order to impart strength thereto, a braided reinforcing thread layer may be formed between the crosslinked rubber layers. Although no particular limitation is placed on the type of the thread constituting the braided reinforcing thread layer, polyester fibers, nylon fibers, aramid fibers and the like are usually used because of their excellent thermal resistance.

Hoses of two-layer structure are made, for example, by molding the crosslinkable rubber composition of the present invention to form an inner layer, forming a braided reinforcing thread layer around it, applying an adhesive thereto, forming thereon an outer layer comprising a crosslinkable rubber composition, and subjecting this assembly to a crosslinking step for effecting crosslink bonding of all layers.

Hoses of three-layer structure are made, for example, by molding the crosslinkable rubber composition of the present invention to form an inner layer, forming a braided reinforcing thread layer around the inner layer, applying an adhesive to the outer surface of the braided reinforcing thread layer, forming thereon an intermediate layer comprising a crosslinkable rubber composition, applying an adhesive to the outer surface of the intermediate layer, forming thereon an outer layer comprising a crosslinkable rubber composition, and subjecting this assembly to a crosslinking step for effecting crosslink bonding of all layers.

### [Rubber rolls]

Rubber rolls may be made according to the same method as generally employed for the fabrication of rubber rolls, and no particular limitation is placed on their fabrication method. For example, there is employed a method which comprises placing a core consisting of a roll-shaped base material (e.g., a metallic rotating shaft) in a roll mold, pouring the rubber composition thereinto and shaping it into a roll surrounding the core, and then crosslinking it by heating to a temperature of 100 to 250°C. After crosslinking, the resulting rubber roll may be subjected, if necessary, to a surface treatment for decreasing the frictional resistance of the surface or reducing its tackiness.

### Best Mode for Carrying Out the Invention

The present invention is more specifically described with reference to the following examples. In the examples and comparative examples, all parts and percentages are by weight unless otherwise stated.

In the examples and comparative examples, the Mooney viscosities of rubbers were measured at 100°C according to JIS K 6383.

The antioxidant used during the application of a high shearing force was poly(2,2,4-trimethyl-1,2-dihydroquinoline) (RD, TMDQ; amine-ketone type "Nocrac 224", manufactured by Oouchi Shinko Chemical Industry Co., Ltd.).

Rubber compositions were evaluated according to the following procedures.

### (1) Tests for the evaluation of high-speed crosslinkability

According to Japan Rubber Association Standard SRIS 3102, about 10 g of each of the uncrosslinked rubber compositions prepared according to the formulations shown in Table 1 was used to measure its scorching times (T10, T50 and T90) (in minutes), maximum torque (Vmax) and minimum torque (Vmin) (in kg/cm) by means of a Curelastmeter. Smaller values of T10, T50 and T90 lower crosslinking rates. Moreover, larger values of Vmax mean higher crosslinking efficiency.

### (2) Tests for the evaluation of crosslinked properties

According to Japanese Industrial Standard (JIS) K 6301, each of the uncrosslinked rubber compositions prepared according to the formulations shown in Table 1 was crosslinked at 170°C for 20 minutes to form a 2 mm thick sheet. Then, using a No. 3 dumbbell die, specimens were punched therefrom and used to measure its tensile strength (in kgf/cm²), 20%, 50%, 100%, 200% and 300% tensile stresses (in kgf/cm²), and elongation (in %). Moreover, its hardness was measured with a JIS spring-operated A type hardness tester. Furthermore, according to JIS K 6301, its test for compression set was carried out at 150°C for 72 hours.

### Preparation of nitrile-containing highly saturated copolymer rubbers having a Mooney viscosity reduced by high-shear treatment

100 parts by weight of a hydrogenated acrylonitrile-butadiene copolymer rubber (having a Mooney viscosity of 140, a degree of hydrogenation of 95%, an iodine value of 11, and an acrylonitrile unit content of 36%) and 3 parts by weight of an antioxidant were fed to a twin-screw extruder and subjected to high-shear treatment under the following conditions. Thus, there were obtained two types of copolymer rubbers. One of them was a copolymer rubber (LZP-1) whose Mooney viscosity was reduced to 71 and then increased to 72 by allowing it to stand in air at room temperature for 30 days, and the other was a copolymer rubber (LZP-2) whose Mooney viscosity was reduced to 56 and then increased to 57 by allowing it to stand in air at room temperature for 30 days.

As the antioxidant, there was used poly(2,2,4-trimethyl-1,2-dihydroquinoline).

Separately, as a comparative example, a copolymer rubber (LZP-3) was prepared under the same conditions as described above, except that no antioxidant was added. This copolymer rubber was such that its Mooney viscosity was reduced to 45 and then increased to 65 by allowing it to stand in air at room temperature for 30 days.

### Twin-screw extruder:

- Model:: BT-40 manufactured by Plastics Engineering Laboratory, Ltd.
- Screw diameter:: 38 mm.
- Screw length:: 1,600 cm.
- L/D ratio:: 42.
- Type:: Seven-barrel construction.
- Screw speed:: 400 rpm.
- Throughput:: 7 kg/hour.
- Shearing rate:: 3,200 S ⁻¹.
- Residence time:: 130-150 seconds.

### Preset temperature:

- Barrel 1 (feeding zone):: 100°C.

### Preset temperature:

- Barrel 2 (melting zone):: 250°C.
- Barrel 3-6 (kneading and shearing zone):: 250-290°C.
- Barrel 7 (cooling and degassing zone):: 200-250°C, 720 mmHg.

### Examples 1-2 and Comparative Examples 1-2

Each of the two nitrile-containing highly saturated copolymer rubbers (LZP-1 and LZP-2) having a reduced Mooney viscosity was compounded with zinc dimethacrylate [Zn(MAA) ₂] and an organic peroxide type compound [Vulcap 40KE; a 40 wt.% preparation of 1,3-bis(t-butyl peroxyisopropyl)benezene] according to the formulations shown in Table 1, and the resulting compositions were tested for high-speed crosslinkability and crosslinked properties. As a comparative example, LZP-3 and a commercially available hydrogenated acrylonitrile-butadiene rubber (Zetpol 2010; with a Mooney viscosity of 85, an iodine value of 58, an iodine value of 11, and a bound acrylonitrile unit content of 36% by weight; manufactured by Nippon Zeon Co., Ltd.) were used and evaluated in the same manner as described above. The results thus obtained are shown in Table 1.

**Table 1**

| | Comparative Example | | Example | |
|---|---|---|---|---|
| | 1 | 2 | 1 | 2 |
| Formulation | | | | |
| Zp2010 | 100 | - | - | - |
| LZP-3 | | 100 | - | - |
| LZP-1 | - | - | 100 | - |
| LZP-2 | - | - | - | 100 |
| Zn(MAA)₂ | 30 | 30 | 30 | 30 |
| Vulcap 40KE | 5 | 5 | 5 | 5 |

| Curelastmeter test at 170°C for 30 minutes | | | | |
|---|---|---|---|---|
| MH (V max) (kg/cm) | 17.6 | 14.3 | 20.8 | 19.6 |
| ML (V min) (kg/cm) | 1.3 | 0.7 | 1.3 | 1.1 |
| T10 (minutes) | 1.0 | 1.0 | 0.7 | 0.8 |
| T50 (minutes) | 3.5 | 3.7 | 3.5 | 3.7 |
| T90 (minutes) | 11.6 | 11.8 | 11.5 | 11.8 |

| Tension test (after heating at 170°C for 20 minutes) | | | | |
|---|---|---|---|---|
| Tensile strength (kgf/cm²) | 333 | 325 | 376 | 357 |
| Elongation (%) | 560 | 590 | 500 | 500 |
| 20% tensile stress (kgf/cm²) | 12 | 12 | 15 | 14 |
| 50% tensile stress (kgf/cm²) | 19 | 16 | 23 | 22 |
| 100% tensile stress (kgf/cm²) | 28 | 25 | 37 | 35 |
| 200% tensile stress (kgf/cm²) | 57 | 49 | 75 | 72 |
| 300% tensile stress (kgf/cm²) | 95 | 81 | 132 | 127 |
| Hardness (JIS A) | 68 | 65 | 69 | 68 |
| After 10 seconds | 63 | 61 | 65 | 65 |

| Compression set test | | | | |
|---|---|---|---|---|
| (%) at 150°C for 72 hours | 56 | 67 | 46 | 42 |

It can be seen from the results shown in Table 1 that use of the crosslinkable rubber compositions of the present invention brought about a marked improvement in strength properties and compression set resistance, as compared with the prior art, i.e., the case in which the hydrogenated NBR (LZP-3) whose Mooney viscosity had been reduced by high-shear treatment in the absence of antioxidant and then increased greatly by allowing it to stand in air at room temperature for 30 days was used, and the case in which the hydrogenated NBR (ZP 2010) having underwent no high-shear treatment was used.

These improving effects of the present invention over the prior art are believed to be attributable to the facts that, since the hydrogenated NBRs used in the present invention had a Mooney viscosity reduced by the application of a high shearing force in the presence of an antioxidant, they exhibit not only improved processability due to a reduction in Mooney viscosity, but also improved miscibility with zinc dimethacrylate and the like, and that, since the rubber compositions of the present invention have storage stability without suffering from gel formation and an increase in Mooney viscosity, their strength properties are improved. In particular, the rubber compositions of the present invention show a marked improvement in compression set resistance and are hence suitable for use as rubber materials for the fabrication of belts, hoses and rubber rolls.

### Effects of the Invention

Thus, the present invention provides crosslinkable rubber compositions which have good processability and can yield rubber products having improved strength and compression set resistance. That is, since the crosslinkable rubber compositions of the present invention have excellent processability and the crosslinked products thereof have excellent mechanical strength and good oil resistance, thermal resistance, weather resistance and like properties, they are useful for the fabrication of various sealing materials, belts, hoses and other rubber products for use in automobiles.

Specifically, they can be used in a wide range of applications including various sealing materials such as O-rings, gaskets, oil seals and Freon seals; belts such as automobile V-belts, poly-ribber belts and toothed transmission belts; hoses such as automobile power steering hoses, high-pressure oil-resisting hoses (e.g., oil-hydraulic hoses for various type of machinery such as construction machinery) and automobile fuel hoses; rolls; rubber products for use in oil and gas wells [e.g., packers, blowout preventers (BOP) and pipe protectors]; various diaphragms; automobile clutch plates and brake shoes (which are made by blending a crosslinkable rubber composition of the present invention with a thermosetting resin such as a phenolic resin or an epoxy resin, and molding the resulting blend); and the like, as well as various rubber vibration isolators, electrical appliances, automobile parts, industrial goods, footwear and the like.

## Claims

1. A crosslinkable rubber composition comprising a nitrile-containing highly saturated copolymer rubber, a metal salt of an α,β-ethylenically unsaturated carboxylic acid, and an organic peroxide, wherein the nitrile-containing highly saturated copolymer rubber is characterized by having been treated by applying a high shearing force thereto in the presence of an antioxidant so as to reduce its Mooney viscosity by 15 points or greater, by having a Mooney viscosity of 5 to 135 and a molecular weight distribution (Mw/Mn) of 3.0 to 5.0, and by showing a Mooney viscosity increase of 10 points or less when it is allowed to stand in air at room temperature for 30 days after the reduction of its Mooney viscosity.

2. A composition as claimed in claim 1 wherein the nitrile-containing highly saturated copolymer rubber is obtained by hydrogenating not less than 70% of the carbon-to-carbon double bonds of a copolymer of an ethylenically unsaturated nitrile monomer and a conjugated diene monomer.

3. A composition as claimed in claim 1 wherein the nitrile-containing highly saturated copolymer rubber contains 10 to 60% by weight of ethylenically unsaturated nitrile monomer units.

4. A composition as claimed in claim 1 wherein the nitrile-containing highly saturated copolymer rubber has been treated by applying a high shearing force thereto so as to reduce its Mooney viscosity by 30 points or greater, and the Mooney viscosity thereof is in the range of 20 to 120.

5. A composition as claimed in claim 1 wherein the nitrile-containing highly saturated copolymer rubber has been treated by applying a high shearing force thereto at a shear rate of 500 to 5,000 S⁻¹, substantially in the absence of oxygen donors.

6. A composition as claimed in claim 1 wherein the nitrile-containing highly saturated copolymer rubber shows a Mooney viscosity increase of 5 points or less when it is allowed to stand in air at room temperature for 30 days after the treatment for reducing its Mooney viscosity by the application of a shearing force.

7. A composition as claimed in claim 1 wherein the antioxidant is selected from among aromatic secondary amine type, amine-ketone type, mercaptobenzimidazole type and bisphenol type antioxidants.

8. A composition as claimed in claim 1 wherein the antioxidant is usually used in an amount of 1 to 10 parts by weight, preferably 2 to 5 parts by weight, per 100 parts by weight of the nitrile-containing highly saturated copolymer rubber.

9. A composition as claimed in claim 1 wherein the ethylenically unsaturated carboxylic acid metal salt has a structure in which an ethylenically unsaturated carboxylic acid of 5 or less carbon atoms having one or more carboxyl groups is combined with a metal by an ionic bond.

10. A composition as claimed in claim 9 wherein the ethylenically unsaturated carboxylic acid is a monocarboxylic acid such as acrylic acid or methacrylic acid; a dicarboxylic acid such as maleic acid, fumaric acid or itaconic acid; or a monoalkyl (of 1 to 8 carbon atoms) ester compound of an unsaturated carboxylic acid, such as monomethyl maleate or monoethyl itaconate.

11. A composition as claimed in claim 9 wherein the metal is zinc, magnesium, calcium, barium, titanium, chromium, iron, cobalt, nickel, aluminum, tin or lead.

12. A composition as claimed in claim 9 wherein the molar ratio of the ethylenically unsaturated carboxylic acid to the metal is in the range of 1/0.5 to 1/3.

13. A composition as claimed in claim 1 wherein the ethylenically unsaturated carboxylic acid metal salt is usually used in an amount of 3 to 120 parts by weight, preferably 5 to 100 parts by weight, per 100 parts by weight of the rubber component.

14. A composition as claimed in claim 1 wherein the organic peroxide is dicumyl peroxide, di-t-butyl peroxide, benzoyl peroxide, 2,5-dimethyl-2,5-di(t-butylperoxy)hexyne-3 or 2,5-dimethyl-2,5-di(t-butylperoxy)hexane.

15. A composition as claimed in claim 1 wherein the organic peroxide is usually used in an amount of 0.2 to 20 parts by weight, preferably 1 to 10 parts by weight, per 100 parts by weight of the rubber component.

16. The crosslinkable rubber composition of claim 1 which is used for the fabrication of belts.

17. The crosslinkable rubber composition of claim 1 which is used for the fabrication of rolls.

18. The crosslinkable rubber composition of claim 1 which is used for the fabrication of hoses.
